# EUROPEAN PATENT SPECIFICATION

(11) **EP 3 563 940 B1**
(45) Date of publication and mention of the grant of the patent: **07.09.2022**
(21) Application number: 17886365.0
(22) Date of filing: 25.12.2017
(51) Int. Cl.: B08B 3/02, B08B 9/093, B08B 9/20, A23G 3/02, A21B 3/16, B05B 13/04, B05B 1/30, B05B 9/00, B05B 9/04, B05B 12/32, A23G 7/00

(54) **CUP-WASHING DEVICE**
TASSENWASCHVORRICHTUNG
DISPOSITIF DE LAVAGE DE COUPELLE

(30) Priority: 29.12.2016 JP 2016257218
(43) Date of publication of application: 06.11.2019
(73) Proprietor: Masdac Co., Ltd., Saitama 359-1147 (JP); Shibuya Machinery Co., Ltd., Ishikawa 920-0022 (JP)
(72) Inventor: MASUDA, Fumiharu, Tokorozawa-shi Saitama 359-1147 (JP); HAYANO, Takeshi, Tokorozawa-shi Saitama 359-1147 (JP); KUROSAKI, Nobukatsu, Tokorozawa-shi Saitama 359-1147 (JP); UOO, Mikio, Kanazawa-shi Ishikawa 920-0022 (JP)
(74) Representative: Geskes, Christoph
(86) International application number: PCT/JP2017/046501
(87) International publication number: WO 2018/123998

(56) References cited:
- JP-A- H0 839 034
- JP-A- H0 974 915
- JP-A- 2010 016 098
- US-B2- 7 412 979

## Description

The present invention relates to a confectionaries-production system comprising a confectioneries-production apparatus and a conveyor cups-washing device, especially a washing device that is provided with high-pressure water for washing cups on a conveying plate on a conveyor.

In a confectioneries-production apparatus such as a tunnel steamer, multiple cups for producing confectioneries are provided in the longitudinal direction of an elongated conveying plate that is on a conveyor on which also are other conveying plates, all arranged in the conveying direction of the conveyor, with each conveying plate being separated from adjacent conveying plates by a space, so that confectioneries can be produced continuously. Because the surfaces of the cups used in this production apparatus get dirty as the confectioneries are produced, it is necessary to periodically wash the cups.

In order to wash the cups by hand, it is necessary to (1) stop the washing apparatus, (2) remove the multiple conveying plates from the conveyor, (3) remove the dirt from the cups, and (4) again put the cups in the confectioneries-production apparatus after washing them, which steps are very troublesome and time-consuming. Also, after a cup has been washed several times with a brush or a sponge, the surface of the cup might become deteriorated, or fragments of a brush or a sponge might be left on the cup's surface as foreign matter that might later be mixed with confectioneries being produced.

US 7,412,979 B2 relates to an apparatus and method for removing a coating material from a predetermined first portion of a container, while retaining the coating on a second portion of the container, or alternatively applying a coating to a predetermined portion of a container or other apparatus. JP H09 74915 A discloses a device for washing seedling raising trays where a covering conduit being a little narrower than the whole width of the top of a seedling raising tray is arranged from a ceiling part of a cleaning part cover toward an inlet part or an outlet part of a cleaner. The covering conduit is made into a roof state branched into two directions so as to drop washing water on right and left end parts on the top of the seedling raising tray. A cleaning liquid discharging conduit for conducting the reflected washing water to the outside of the cleaner is installed at the right and left in the transportation direction of the seedling raising tray so as to guide the washing water to a lower washing water discharging conduit of the lower part. JP H08 39034 A discloses a washer comprising a conveyer belt on which piled cases are mounted. The upper part and side part of the piled cases are covered with shutters of a washing chamber, whereby the cases and a drying chamber are separated by the first shutter so that washing liquid is prevented from scattering outside the washing chamber. The washing liquid is ejected from nozzles attached to the insides of the shutters to remove dirt and blots from the surface of the case. When the ejection of the washing liquid is finished, the transfer of the cases to the drying chamber becomes possible immediately. Aside from washing by hand, automatic cleaning devices, such as that disclosed in Patent Document 1, have been used for cleaning confectioneries-production apparatuses, but that prior-art device requires steps such as applying a solvent to a cup's surface and then washing and rinsing the cup's surface, and therefore it is impossible to carry out washing without stopping the production of the confectioneries. Therefore, there has been a demand for a washing device that does not need production to be stopped for washing, and that is free from the risk of cups being contaminated by foreign matter.

Patent Document 2 discloses a device for washing a thin food-carrying container, in which device the container faces downward on a conveyor, and hot water is sprayed onto the container from an ejection nozzle on the lower side of the conveyor. However, this device fails to provide a configuration capable of satisfactorily washing the inner surface of a cup in a short time.

Patent Document 1: Japanese Unexamined Patent Application Publication No. 2009-279350;
Patent Document 2: Japanese Unexamined Patent Application Publication No. 2009-072758.

This invention is intended to solve the above-mentioned problems and to provide a cups-washing device that can wash cups of various shapes provided on a conveyor of a confectioneries-production apparatus without stopping the production of the confectioneries in order to wash the cups, and that avoids the risk of the confectioneries being contaminated by foreign matter.

The problem is solved by a confectionaries-production system comprising a confectioneries-production apparatus and a conveyor cups-washing device in accordance with claims 1 and 2 of the present invention. Especially, a cups-washing device of the present invention, provided for solving the above specified problems, is incorporated in a confectioneries-production apparatus for washing cups that are fixed to a conveying plate, with multiple conveying plates being provided on a conveyer and spaced from each other in the conveying-plate conveying direction. The device includes a high-pressure pump for converting water of 40 degrees C to 90 degrees C into high-pressure water of 1 MPa to 10 MPa, a high-pressure water hose fed with high-pressure water provided by the high-pressure pump, a nozzle unit having multiple nozzles that spray the high-pressure water fed by the high-pressure water hose toward cups facing downward on the conveying plate, a motor to slide the nozzle unit in the longitudinal direction of the conveying plate, and a cover plate that is raised when the conveyor is moving in the conveying-plate conveying direction, and that is lowered when the conveying plates stop moving so as to block the spaces between a conveying plate and the subsequent conveying plate. The insides of the cups placed on two adjacent rows of conveying plates are washed when the nozzle unit slides in the longitudinal direction of the conveying plate.

The nozzle unit is moved to a position beyond either longitudinal end of the conveying plate, and in this position, the upper portion of the nozzle unit is covered by a shield.

The cups-washing device of this invention provides the following advantageous effects: (1) The device prevents deterioration of cups and reduces the risk of foreign-matter contamination as compared with washing by using a brush or a sponge, because the cups are washed by high-pressure hot water ejected from a nozzle. (2) Because washing with high-pressure water is performed with the cups being contacted only by water and not by a brush or other cleaning implement, cups that have complicated shapes can also be washed. (3) It is possible to remove from the cups protein stains that usually are difficult to eliminate. (4) Because the washing is performed by sliding the nozzle unit, driven by a motor, forward or backward, as appropriate, washing can be performed with fewer nozzles. (5) Because a cover plate for blocking the space between the two adjacent conveying plates is provided, high-pressure water can be prevented from scattering to the back side (the back side of each cup) of a conveying plate during washing. (6) The device is configured such that if the nozzle unit slides once in the longitudinal direction of the conveying plate, about one-half of the inside of the cups on two adjacent conveying plates are washed, and therefore, washing can be performed while operation of the conveyor is intermittently stopped, without stopping the confectioneries production line.

The nozzle unit is configured to move to a position beyond the front end or the rear end of the conveying plate, and at this position the upper part of the nozzle unit is covered by a shield, which prevents the high-pressure water from splashing out onto the upper part of the casing. Therefore, when conveying plates are transported by a conveyor, where the nozzle unit is positioned beyond the front end or the rear end of the conveying plate, the high-pressure water does not splash from the casing, even if when the cover plate is moved away from the conveying plate. Further, the spraying of the high-pressure water can be kept on without interruption, which eliminates the need to use a valve to control the on/off control for ejecting the high-pressure water.

Fig. 1 is a diagram showing the functioning of a cups-washing device of the present invention.

Fig. 2 is a simplified perspective views of cups being washed, showing the conveyor and the main-body mechanism.

Fig. 3 is a bottom view showing the relationship among cups, nozzles, and conveying plates.

Fig. 4 is a front view showing the relationship between nozzle units and cups.

Fig. 5 is an explanatory diagram showing the first stage of the cup-washing process.

Fig. 6 is an explanatory diagram showing the subsequent stage of the cup-washing process.

Fig. 7 is an explanatory diagram showing the next-subsequent stage of the cup-washing process.

Fig. 8 is an explanatory diagram showing the next-subsequent stage of the cup-washing process.

Fig. 9 is an explanatory diagram showing the next-subsequent stage of the cup-washing process.

Fig. 10 is a front view of the main-body mechanism of the cups-washing device of the present invention.

Fig. 11 is a right-side view of the main-body mechanism of the cups-washing device of the present invention.

Fig. 12 is a plan view of the main-body mechanism of the cups-washing device of the present invention.

Fig. 13 is an enlarged plan view of the nozzle unit of Fig. 12.

Fig. 14 is an enlarged left-side view of the nozzle unit of Fig. 12, showing a condition where the nozzle unit is at the rear end of the conveying plate.

The cups-washing device according to the present invention will now be described with reference to the accompanying drawings.

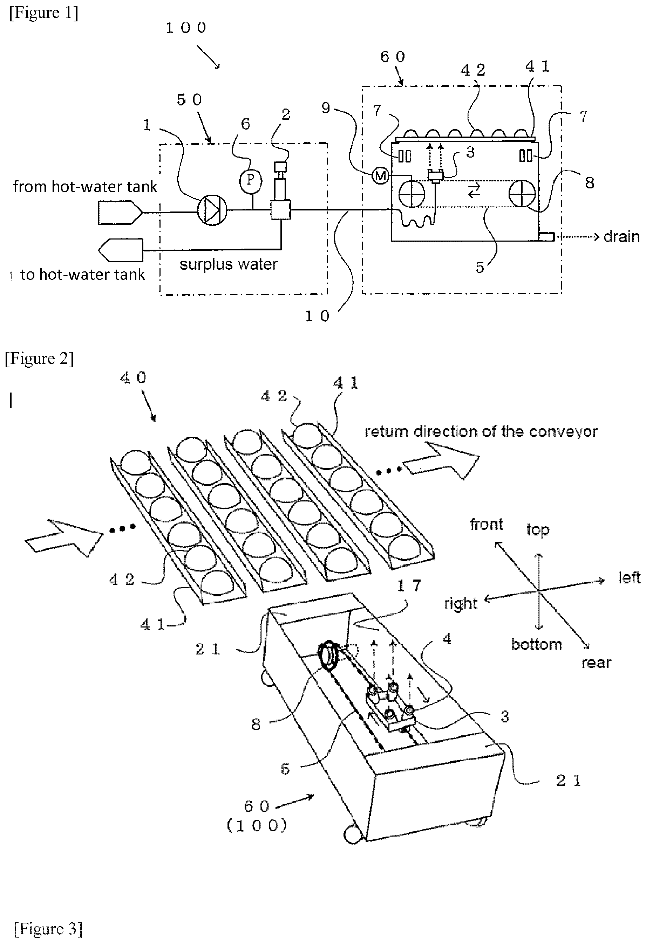

Fig. 1 is a diagram showing the functioning of the cups-washing device 100 of the present invention. The cups-washing device 100 includes a high-pressure-water generator 50 and a main-body mechanism 60, each of which is provided in an independent casing. The main-body mechanism 60 is incorporated in a confectioneries-production apparatus (not shown). The high-pressure-water generator 50 is installed near the main-body mechanism section 60. There is a tunnel steamer as an example of the confectioneries-production apparatus. The tunnel steamer is about 7.0 m long, about 1.3 m high and about 1.4 m wide, though it is not limited to that size. Steam is used to continuously produce steamed confectioneries. Inside the tunnel steamer is a conveyor 40 that includes a pair of endless chains provided in the longitudinal direction of the tunnel steamer and multiple elongated conveying plates 41 attached to the entire periphery of the chains. Six cups 42, for example, are provided in a row on each conveying plate 41. In the tunnel steamer, when the conveying plates 41 are being conveyed on the upper surface of the conveyor 40, confectioneries are produced, after which the conveying plate is turned over when the chain passes around the vertical turning point and the cups 42 are washed in the return direction of the conveyor. In other words, during washing, the opening of each cup 42 faces downward.

The high-pressure-water generator 50 consists of a high-pressure pump 1 and a pressure-regulating valve 2. The high-pressure pump 1 is a triple-plunger pump that operates in a 120-degree phase difference around the crank shaft of the pump and that ejects water under pressure. A discharge pressure of 1 MPa to 10 MPa is used. In this example, the pressure of the high-pressure water is at about 7 MPa. Considering that the pressure of tap water typically is about 0.2 MPa to 0.4 MPa, the pressure used is higher than tap-water pressure. As shown in Fig. 1, the pressure-regulating valve 2 is configured to return the water to the surplus-water line if the pressure at the discharge side becomes equal to or higher than the prespecified pressure. The high-pressure water discharged from the pressure-regulating valve 2 is sent to the high-pressure-water hose 10. Here, by using a pressure gauge 6 one can visually check the pressure of the high-pressure water. If steam is available, hot water can be used to heat water by using a steam pipe. The temperature of the hot water can be adjusted to about 40 degrees C to 90 degrees C; in this embodiment, the device is operated at about 60 degrees C.

The main-body mechanism 60 has a rectangular three-dimensional shape, and is open on its upper side. The conveying plates 41 pass above the opening. Because the cups 42 face downward, high pressure hot water is sprayed upward from the nozzle unit 3 to wash the cups. The nozzle unit 3 can slide forward or backward in the longitudinal direction of the conveying plate 41. A chain 5 is wound around the sprocket wheels 8, 8 which are rotated by the motor 9, and the movement of the chain 5 causes the nozzle unit 3 to slide. Proximity sensors 7 are placed at the front and the rear ends of the conveying plate 41, and when the nozzle unit 3 comes to the front end or the rear end, the motor's rotation changes from forward to stop or to reverse, or vice versa, and the nozzle unit 3 slides back and forth accordingly. In this embodiment, the high-pressure water used is at a volume of about 30 liters/minute. Also, the high-pressure-water generator 50 and the main-body mechanism 60 are configured to be accommodated in separated casings, but they may be configured to be accommodated in a single casing.

Fig. 2 is a simplified perspective view of cups being washed, as seen from above. The conveying plate 41 has an elongated shape, and its size may be about 1.3 m long and about 10 cm wide, for example. Each upper periphery of the cups 42 is welded to the conveying plate 41 so that they do not protrude from the surface of the conveying plate 41. Because the cups 42 face downward during washing, each of the cups 42 in Fig. 2 shows a hemispherical shape. In Fig. 2, each conveying plate 41 is configured to have six cups 42 arranged in a row, but the number of cups does not have to be six. Both sides of the conveying plate 41 include a side wall that is about 2 cm high (though the side wall does not have to be this height) and that is intended to keep the steam around the hemispherical surface of the cups 42 for a specified time. The conveying plates 41 are driven by a chain (not shown), and adjacent conveying plates 41 are separated by a predefined distance (about 1 cm) so that the direction in which the conveyor 40 is moving is reversed at the turn. The large arrows on the right and left sides of the group of conveying plates 41 indicate the return direction of the conveyor 40.

As shown in Fig. 2, the main-body mechanism 60 is open at the top, the nozzle unit 3 is at the upper opening 17 and high-pressure water from nozzles 4 is sprayed on the inside of each cup 42 on the conveying plate 41. The top of the front and rear ends of the main-body mechanism 60 are each covered by a shield 21. When the nozzle unit 3 is slid to the position of the front end or rear end, the high-pressure water that is discharged from the nozzles 4 is blocked by shield 21 so that the water does not come out from the upper part of the main-body mechanism 60, but instead drops to the bottom of the casing. The nozzle unit 3 is pulled by a chain 5 that is wound around the sprocket wheels 8, 8, and it can be slid forward or backward, as appropriate.

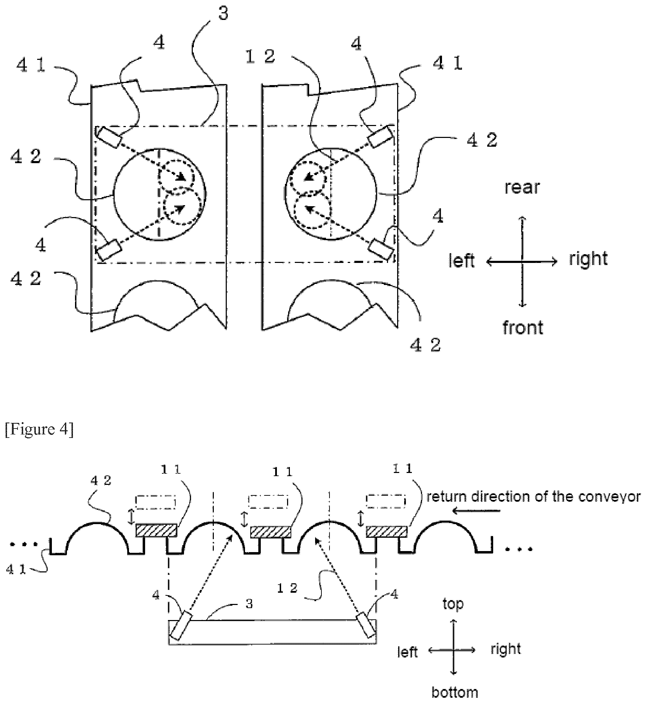

Fig. 3 is a bottom view depicting the relationship among a cup 42, nozzles 4, and conveying plates 41. There are provided four nozzles 4 on the nozzle unit 3. The insides of the cups 42 (in one row) on the conveying plate 41 are washed by the two nozzles 4 on the left side of the nozzle unit 3, while the insides of the cups 42 (in one row) on the adjacent conveying plate 41 are washed by the two other nozzles 4 on the right side of the nozzle unit 3. Once the nozzle unit 3 slides from the front end to the rear end of the conveying plate 41, or vice versa, in a single slide cycle, an inner half of each of the cups 42 on the two adjacent conveying plates 41, 41 are washed together along with the surfaces of the conveying plates 41, 41. Washing with high-pressure water can also remove protein stains that usually are difficult to remove by brushes or sponges.

Fig. 4 is a front view showing the relationship between the nozzle unit 3 and cups 42. During washing, spaces between two adjacent conveying plates 41, 41 are sealed by a cover plate 11, which is placed on each of three places so that the sprayed high-pressure water 12 does not leak to the back side of the conveying plate 41. This is done because if water is on the back side of the conveying plate 41 when at the turning point the conveyor 40 moves in the returning direction, the water will fall from the back side of the conveying plate 41 to the front side of the next conveying plate 41, and as a result, the surfaces of the cups 42 of the next conveying plate 41get wet. The cover plate 11 is moved up and down by air from an air cylinder (not shown). Also, the conveyor 40 is operated intermittently, with the time of this operation being a cycle of 6 seconds off, 2 seconds on. Therefore, within the off time of 6 seconds, while the conveying plate 41 is stopped, the cover plate 11 is lowered to close the upper part of the space between the conveying plates 41, 41, the nozzle unit 3 is slid once, and the cover plate 11 is lifted so as to enable the conveying plate 41 to be advanced again.

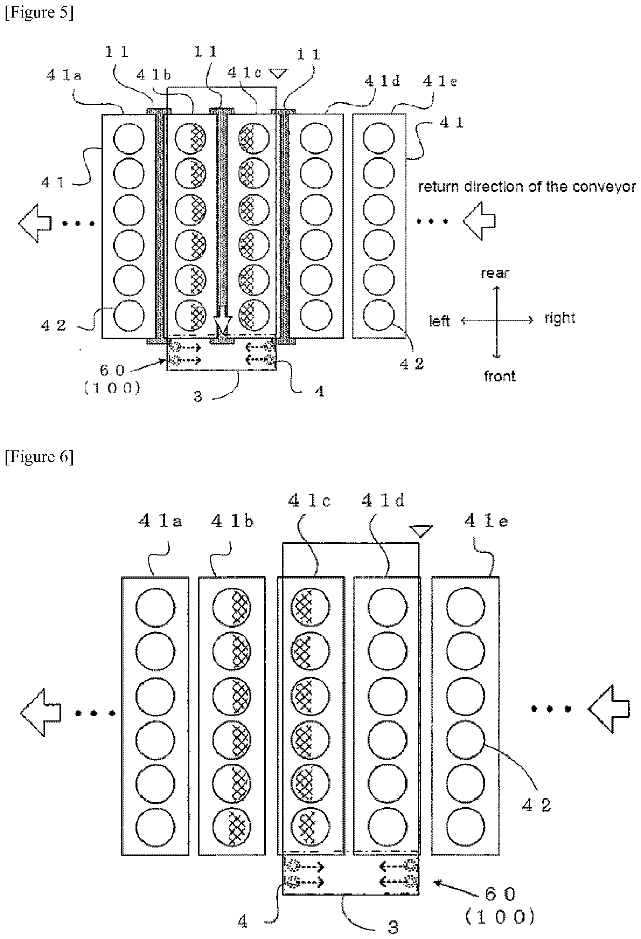

Fig. 5 to Fig. 9 are explanatory views showing the cup-washing process. In Fig. 5, the conveying plates 41a to 41e advance in the return direction of the conveyor 40, as indicated by the two arrows and the conveying plates 41b and 41c are stopped at the upper side of the main-body mechanism 60. In this condition, the nozzle unit 3 is slid from the rear end to the front end of the conveying plate 41, and washing is performed, whereby the lower side of the conveying plate 41b and the insides of each half of the cups 42 on the conveying plates 41b and 41c are washed, as indicated by cross-hatching.

Fig. 6 shows a state in which the conveying plates 41 have advanced by one conveying plate in the return direction of the conveyor 40. The cover plate 11 is separated from the conveying plate 41. In this state, the conveying plates 41c and 41d are stopped at the upper side of the main-body mechanism 60. The nozzle unit 3 remains stopped at the front end.

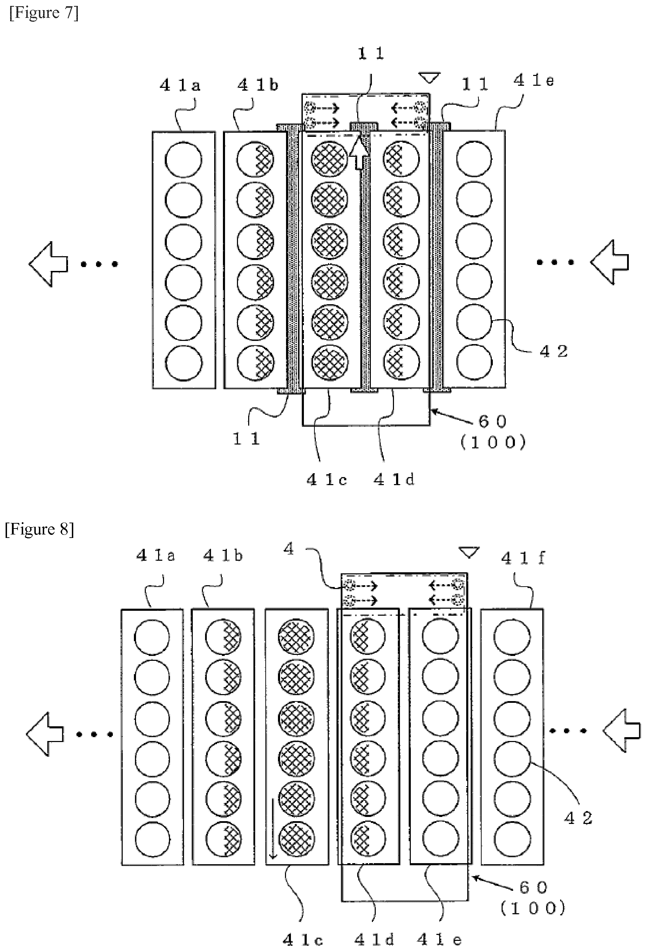

Fig. 7 shows a state in which the conveying plates 41c and 41d are stopped at the upper side of the main-body mechanism 60, the nozzle unit 3 has been slid from the front end to the rear end of the conveying plate 41, and the cups 42 have been washed, the latter as shown by cross-hatching. The cover plate 11 has been lowered to close the space between the conveying plates 41. In this case, the insides of each half of the cups 42 on the conveying plates 41c and 41d have been washed, the latter as indicated by cross-hatching. Because one-half of each of the cups 42 on the conveying plate 41c had been washed in the step shown in Fig. 5, now the entire inner surface of each of the cups 42 has been washed.

Fig. 8 shows a state in which the conveying plates 41 have further advanced by one conveying plate in the return direction of the conveyor 40. The cover plate 11 is separated from the conveying plate 41. In this state, the conveying plates 41d and 41e are stopped at the upper side of the main-body mechanism 60. The nozzle unit 3 remains stopped at the rear end of the conveying plate 41.

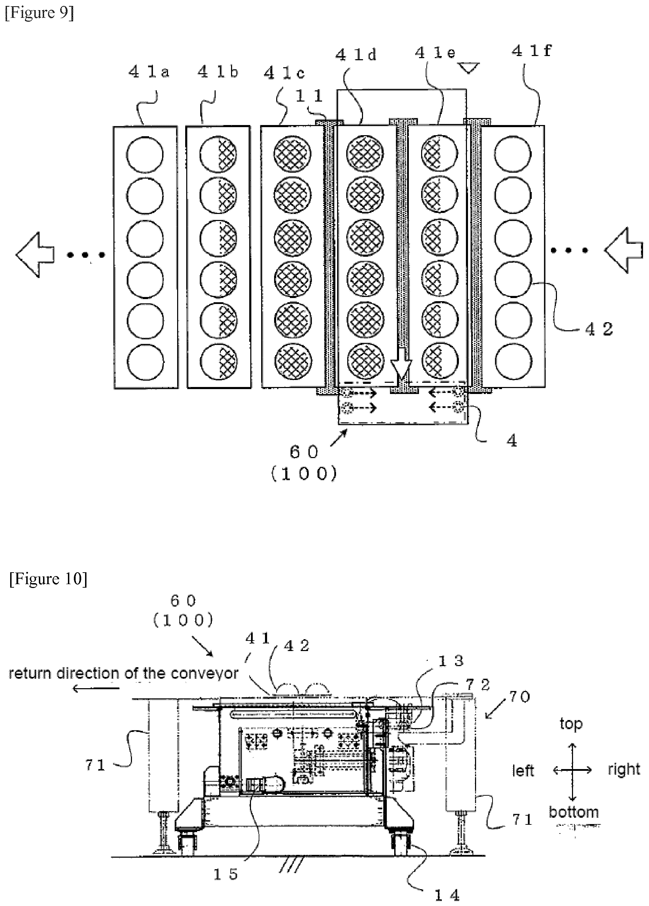

In Fig. 9, the conveying plates 41d and 41e are stopped at the upper side of the main-body mechanism 60, the nozzle unit 3 has been slid from the rear end to the front end of the conveying plate 41, and only the cups on 41d and 41e have been washed completely. The cover plate 11 has been lowered to close the space between the conveying plates 41. By washing, the insides of each half of the cups 42 on the conveying plates 41d and 41e have been washed, as indicated by cross-hatching. Because one-half of the inside of each of the cups 42 on the conveying plate 41d had been washed in the step shown in Fig. 7, now the entire inner surface of each of the cups 42 on the conveying plate 41d has been washed. By such repetition, all of the cups 42 are washed.

Fig. 10 is a front view of the cups-washing device (main-body mechanism) of the present invention. The body mechanism 60 is configured to be inserted between the support legs 71, 71 of the confectioneries-production apparatus 70 for producing steamed confectioneries. In order to ease that insertion, four casters 14 are provided at the bottom and two casters 13 are provided at the top left-side corners of the body mechanism 60, which is guided on rails 72 of the base that extends from the support legs 71. As a result, the main-body mechanism 60 can be inserted and withdrawn by being slid straight. The water that was used to wash the cups 42 accumulates on the bottom of the casing of the main-body mechanism 60, and is discharged to an external tank via a washing water drain 15. The high-pressure water hose enters from the bottom at the left-front of the body mechanism 60.

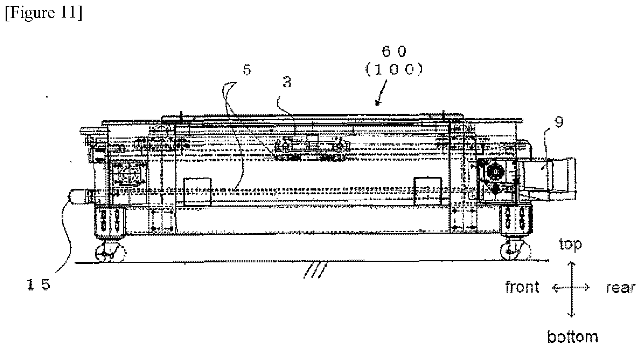

Fig. 11 is a right-side view of the cups-washing device (main-body mechanism) of the present invention. The nozzle unit 3 is slid forward or backward by the chain 5, which is driven by a motor 9, which is a geared motor. The sprocket wheel 8 is provided with a shaft in the direction perpendicular to the motor's shaft. The nozzle unit 3 can be stopped at a position beyond the front and rear ends of the conveying plate 41.

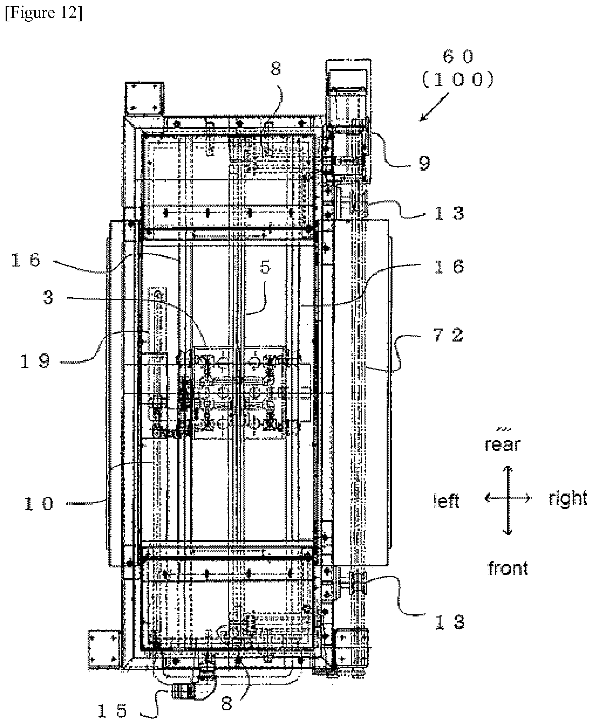

Fig. 12 is a plan view of the cups-washing device (main-body mechanism) of the present invention. On the right side are casters 13, 13 that are guided on a rail 72 of the extension base of the support leg 71 indicated by a broken-chain line. The central portion of the nozzle unit 3, is attached to a chain 5 that extends in both the front and rear directions of the main-body mechanism 60. The chain 5 is wound around the sprocket wheels 8, 8 and is driven by a motor 9 that is provided on the right side at the rear end of the main-body mechanism 60. The high-pressure water hose 10 enters into the cups-washing device from the lower-left front of that device and extends to the rear end, where it curves upward and enters the nozzle unit 3.

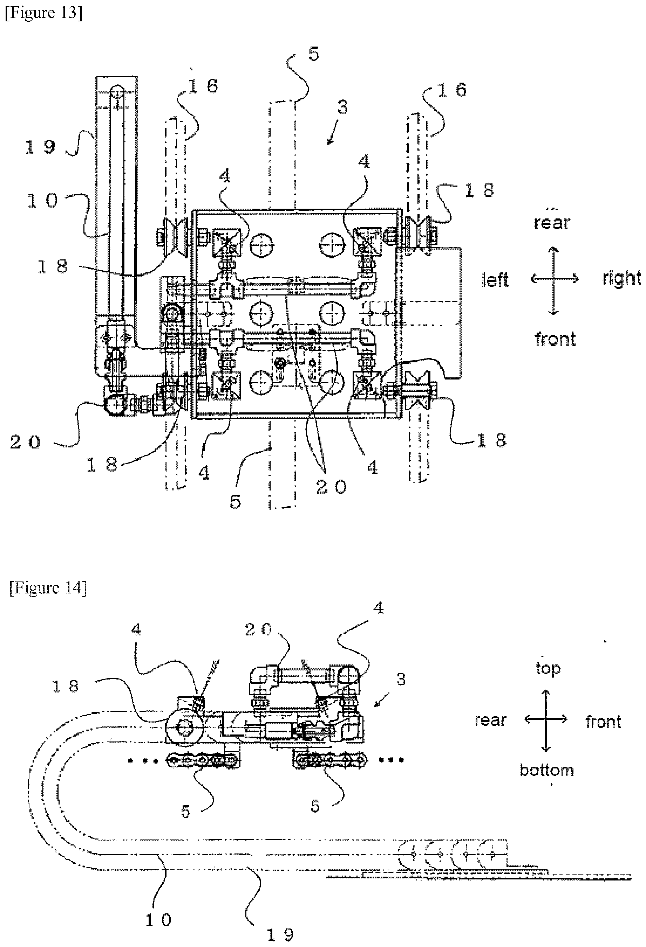

Fig. 13 is an enlarged plan view of the nozzle unit 3 of Fig. 12. The nozzle unit 3 is provided with wheels 18, 18 on both its left and right sides of its front and rear ends, and said wheels slide on rails 16, 16, whereby the nozzle unit 3 can be pulled by the central chain 5. The high-pressure water hose 10 is protected by a hose guide 19 and is connected to the high-pressure-water pipe 20 of the nozzle unit 3. The high-pressure-water pipe 20 branches to the right and left, and two nozzles 4, 4 are provided in each of the left and right high-pressure-water pipes.

Fig. 14 is an enlarged left-side view of the nozzle unit 3 of Fig. 12. Because the high-pressure water hose 10 is attached to the hose guide 19 and thereby is guarded, even when the nozzle unit 3 slides forward or backward, the high-pressure water hose 10 does not twist or touch the wall of the main-body mechanism 60. The hose guide 19 is formed by connecting parts that are similar to chains, and Fig. 14 shows a condition where the nozzle unit 3 is at the rear end of the conveying plate 41. When the nozzle unit 3 slides to the front end of the conveying plate 41, the bent portion of the hose guide 19 moves toward the right in Fig. 14, and it continues to move in that direction until it reaches the center of the main-body mechanism 60 in the longitudinal direction. The high-pressure-water-generating unit 50 has the configuration shown in Fig. 1, and the casing and the detailed configuration of the water-generating unit 50 are not shown here.

In the present embodiment, as shown in Fig. 3, the nozzles 4 of the nozzle unit 3 are set so as to wash the inner half of each cup in two adjacent rows of cups 42. Here, "the inner half' means the right half of the cup 42 on the left-side conveying plate and the left half of the cup 42 on the right-side conveying plate. However, the nozzles can instead be placed to wash the left half of the cup 42 on the left-side conveying plate and the right half of the cup on the right-side conveying plate. This arrangement also results in washing similar to that shown in Figs. 5 to 9. In this embodiment, a hemispherical cup having a depth of about 3 cm is used, but elliptical cups and the like also can be washed well. Also, in this embodiment, as shown in Fig. 4, a cover plate 11 is provided at three places so as to close the spaces between the conveying plates 41, but just one cover plate 11 placed in the middle would be acceptable.

This invention is preferably used as a cups-washing device that preforms washing by spraying hot water at high pressure from a slidable nozzle. As a result, this invention is suitable as a device for washing cups provided on a conveyor or as a device that does not require that cups be in contact with any brush, sponge, or the like in order to be washed.

### [List of Reference Numbers]

1 high-pressure pump
2 pressure-regulating valve
3 nozzle unit
4 nozzle
5 chain (for nozzle unit)
6 pressure gauge
7 proximity sensor
8 sprocket wheel
9 motor
10 high-pressure water hose
11 cover plate
12 high-pressure water
13 caster
14 caster
15 washing-water drain
16 rail (for nozzle unit)
17 upper opening (body mechanism portion)
18 wheel (for nozzle unit)
19 hose guide
20 high-pressure water pipe
21 shield
40 conveyor
41 conveying plate
41a - 41e conveying plates
42 cup
50 high-pressure-water generator
60 main-body mechanism
70 confectioneries-production apparatus
71 support leg
72 rail
100 cups-washing device

## Claims

1. A confectioneries-production system comprising a confectioneries-production apparatus (70) with multiple conveying plates (41a - 41e) being provided on a conveyer (40) and spaced from each other in the conveying-plate conveying direction, and a conveyor cups-washing device (100) for washing cups (42) that are fixed to the conveying plates (41), said device (100) comprising:
a high-pressure pump (1) for converting water of 40 degrees C to 90 degrees C into high-pressure water (12) of 1 MPa to 10 MPa;
a high-pressure water hose (10) fed with high-pressure water (12) provided by the high-pressure pump (1);
a nozzle unit (3) having multiple nozzles (4) that are configured to spray the high-pressure water (12) fed into the high-pressure water hose (10) toward cups (42) facing downward on the conveying plate (41);
**characterized in that** the conveyor cups-washing device (100) further comprises
a motor (9) to slide the nozzle unit (3) in the longitudinal direction of the conveying plate (41); and
a cover plate (11) that is configured to be raised when the conveyor (40) is moving in the conveying-plate conveying direction, and that is configured to be lowered when the conveying plates (41) stop moving so as to block the space between a conveying plate (41) and the subsequent conveying plate (41),
wherein the insides of the cups (42) placed on two adjacent rows of conveying plates (41) are washed by the nozzle unit (3) slides in the longitudinal direction of the conveying plate (41).

2. The confectioneries-production system according to Claim 1, wherein the cups-washing device (100) further comprises a shield (21) to cover the upper portion of the nozzle unit (3) in a position in which the nozzle unit (3) is moved to a position beyond either longitudinal end of the conveying plate (41).

## Patentansprüche

1. Süßwarenherstellungssystem umfassend eine Süßwarenherstellungsvorrichtung (70) mit mehreren Förderplatten (41a - 41e), die auf einer Fördereinheit (40) vorgesehen und in Förderrichtung der Förderplatten voneinander beabstandet sind, und eine Förderbecher-Spülvorrichtung (100) zum Waschen von Bechern (42), die an den Förderplatten (41) befestigt sind, wobei die Vorrichtung (100) umfasst:
eine Hochdruckpumpe (1) zur Umwandlung von Wasser mit einer Temperatur von 40°C bis 90°C in Hochdruckwasser (12) mit einem Druck von 1 MPa bis 10 MPa;
einen Hochdruckwasserschlauch (10), der mit Hochdruckwasser (12) gespeist wird, das von der Hochdruckpumpe (1) bereitgestellt wird;
eine Düseneinheit (3) mit mehreren Düsen (4), die so konfiguriert sind, dass sie das in den Hochdruckwasserschlauch (10) eingespeiste Hochdruckwasser (12) auf Becher (42) sprühen, die auf der Förderplatte (41) nach unten gerichtet angeordnet sind;
**dadurch gekennzeichnet, dass** die Förderbecher-Spülvorrichtung (100) außerdem umfasst
einen Motor (9) zum Verschieben der Düseneinheit (3) in Längsrichtung der Förderplatte (41); und
eine Abdeckplatte (11), die so konfiguriert ist, dass sie angehoben wird, wenn sich die Fördereinheit (40) in der Förderrichtung bewegt, und die so konfiguriert ist, dass sie abgesenkt wird, wenn die Förderplatten (41) stoppen, um den Raum zwischen einer Förderplatte (41) und der nachfolgenden Förderplatte (41) zu blockieren,
wobei die Innenseiten der auf zwei benachbarten Reihen von Förderplatten (41) angeordneten Becher (42) durch die in Längsrichtung der Förderplatte (41) gleitende Düseneinheit (3) gewaschen werden.

2. Süßwarenherstellungssystem gemäß Anspruch 1, wobei die Becher-Spülvorrichtung (100) weiterhin eine Abschirmung (21) umfasst, um den oberen Abschnitt der Düseneinheit (3) in einer Position abzudecken, in der die Düseneinheit (3) in eine Position hinter einem der beiden Längsenden der Förderplatte bewegt wird.

## Revendications

1. Système de production de confiseries comprenant un dispositif (70) de production de confiseries avec de multiples plaques (41a - 41e) de transport qui sont prévues sur un transporteur (40) et espacées les unes des autres dans la direction de transport desdites plaques de transport, et un dispositif (100) transporteur de lavage de coupelles pour laver des coupelles (42) qui sont fixées sur lesdites plaques (41) de transport, ledit dispositif (100) comprenant :
une pompe (1) à haute pression pour transformer de l'eau de 40 °C à 90 °C en eau (12) à haute pression de 1 MPa à 10 MPa ;
un tuyau (10) d'eau à haute pression alimenté en eau (12) à haute pression fournie par ladite pompe (1) à haute pression ;
une unité (3) de buses comprenant de multiples buses (4) qui sont configurées pour pulvériser ladite eau (12) à haute pression alimentée dans ledit tuyau (10) d'eau à haute pression vers lesdites coupelles (42) orientées vers le bas sur ladite plaque (41) de transport ;
**caractérisé en ce que** ledit dispositif (100) transporteur de lavage de coupelles comprend en outre un moteur (9) pour faire glisser ladite unité (3) de buses dans la direction longitudinale de ladite plaque (41) de transport ; et
une plaque (11) de recouvrement qui est configurée pour être soulevée lorsque ledit transporteur (40) se déplace dans ladite direction de transport desdites plaques (41) de transport, et qui est configurée pour être abaissée lorsque lesdites plaques (41) de transport cessent de se déplacer de manière à bloquer l'espace entre une plaque (41) de transport et la plaque (41) de transport suivante,
dans lequel les intérieurs desdites coupelles (42) placées sur deux rangées adjacentes de plaques (41) de transport sont lavées par ladite unité (3) de buses qui glisse dans la direction longitudinale de ladite plaque (41) de transport.

2. Système de production de confiseries selon la revendication 1, dans lequel ledit dispositif (100) de lavage de coupelles comprend en outre un écran (21) pour couvrir la partie supérieure de ladite unité (3) de buses dans une position dans laquelle ladite unité (3) de buses est déplacée vers une position au-delà de chaque extrémité longitudinale de ladite plaque (41) de transport.
